# FASCICULE DE BREVET EUROPEEN

(11) **EP 1 486 438 B1**
(45) Date de publication et mention de la délivrance du brevet: **21.03.2007**
(21) Numéro de dépôt: 03102104.1
(22) Date de dépôt: 10.07.2003
(51) Int. Cl.: B65G 47/14

(54) **Unité pour l'alimentation d'un poste de travail en conteneurs vides**
Vorrichtung zum Zuführen von leeren Behältern zu einer Bearbeitungsstation
Device for feeding empty containers to a workstation

(30) Priorité: 11.06.2003 FR 0306971
(43) Date de publication de la demande: 15.12.2004
(73) Titulaire: Kalix, 91940 Les Ulis (FR)
(72) Inventeur: Ortiz, Jacques, 93100, MONTREUIL (FR); Schneiter, Dominique, 91940, LES ULIS (FR)
(74) Mandataire: Kohn, Philippe

(56) Documents cités:
- FR-A- 2 288 692
- FR-A- 2 754 798
- US-A- 3 746 212

## Description

L'invention concerne une unité pour l'alimentation d'un poste de travail automatisé.

L'invention concerne plus particulièrement une unité pour l'alimentation d'un poste de travail automatisé en conteneurs vides comportant des formes cylindriques, tronconiques, ou elliptiques, notamment un poste de remplissage et de sertissage, l'unité comportant, d'amont en aval, un magasin destiné à recevoir des conteneurs vides introduits par une ouverture et à les libérer à son ouverture inférieure, une goulotte d'accès inclinée et vibrante dont une partie amont est agencée sous l'ouverture inférieure du magasin et dont une extrémité aval alimente conteneur par conteneur un bac en forme de portion de cylindre agencé en regard de l'extrémité inférieure d'un tapis vertical porteur d'aubes, qui glissent avec jeu à proximité de la paroi intérieure du bac pour assurer la préhension des conteneurs vides puis qui glissent contre une paroi verticale de l'unité pour assurer leur élévation vers le poste de travail automatisé.

On connaît de nombreux exemples d'unités d'alimentation de ce type.

Le document FR-B1-2.754.798 décrit et représente une unité de ce type dans laquelle la goulotte d'alimentation du bac comporte à son extrémité aval un carrousel sensiblement en forme d'étoile dont les branches, conformées en peignes, comportent des dents qui glissent dans le bac entre des dents de peignes formés par les aubes du tapis vertical.

Cette configuration permet d'assurer un transfert exempt de discontinuité entre le carrousel et le tapis vertical et par conséquent d'éviter le blocage des conteneurs vides lors de leur transfert de la goulotte au convoyeur.

Toutefois, cette configuration ne permet pas de garantir en toute certitude un positionnement des conteneurs sur les aubes du convoyeur, de sorte qu'un conteneur peut prendre une position oblique sur une aube, cette position étant alors susceptible de causer ultérieurement des problèmes de positionnement dans la chaîne de fabrication, notamment en sortie du tapis vertical.

Pour remédier à cet inconvénient, l'invention propose une unité du type décrit précédemment, caractérisée en ce que le bac est semi cylindrique et en ce qu'il comporte à son extrémité inférieure un dispositif qui est destiné à aligner les conteneurs vides de forme cylindrique ou tronconique sensiblement selon leur génératrice, pour assurer leur bonne préhension par les aubes du tapis.

Selon d'autres caractéristiques de l'invention :
- le dispositif comporte un guide, de section concave orientée suivant l'axe de rotation d'un rouleau inférieur du tapis, qui est destiné à aligner les conteneurs vides sensiblement selon leur génératrice,
- le guide présente une section en forme de demi-cylindre,
- le guide présente une section en forme de demi-cylindre au fond de laquelle est agencé un vé de positionnement,
- le dispositif est de surcroît pneumatique et comporte au moins une lumière oblongue, agencée au fond du guide, qui est alimentée en dépression d'air pour aligner la génératrice inférieure du conteneur dans le guide,
- le dispositif comporte deux lumières oblongues qui sont agencées symétriquement de part et d'autre d'une partie inférieure centrale escamotable du guide,
- la goulotte d'accès comporte une gouttière inférieure qui est montée coulissante sur un rail de même direction et qui est liée à une extrémité d'une bielle dont l'autre extrémité est montée excentrée sur un plateau rotatif pour produire les vibrations de la gouttière inférieure,
- le magasin est fixé à au moins un montant vertical de l'unité et la gouttière inférieure fait saille hors de l'unité en s'étendant au delà de l'ouverture inférieure du magasin et au delà du montant pour éliminer tout risque de bourrage des conteneurs,
- la goulotte d'accès comporte, à proximité du bac, une plaque supérieure qui est destinée à guider les conteneurs vers le bac et qui est réglable en hauteur pour s'adapter à différents diamètres de conteneurs,
- une tôle de guidage en forme de chevron comporte un bras qui est fixé à l'arrière de la plaque supérieure et un bras qui est solidaire d'un dispositif générateur de vibrations,
- une face inférieure de la plaque supérieure est susceptible de recevoir une entretoise qui comporte au moins une surface inclinée par rapport à la plaque supérieure pour guider les génératrices de conteneurs de forme tronconique,
- l'entretoise comporte de surcroît une surface qui est parallèle à la plaque supérieure et qui est destinée à guider la génératrice d'une partie d'extrémité d'un conteneur destinée à recevoir un bouchon,
- l'alimentation conteneur par conteneur du bac par la goulotte est réalisée au moyen :
   - d'au moins un picot escamotable qui est susceptible de faire saillie à proximité de l'extrémité aval de la gouttière de la goulotte entre deux conteneurs consécutifs,
   - d'une porte escamotable, agencée à l'extrémité aval de la goulotte, qui est susceptible d'être escamotée pour libérer dans le bac le conteneur contenu dans la goulotte entre le picot escamotable et la porte,
- au moins un des éléments parmi le plateau rotatif actionnant la gouttière de la goulotte, le dispositif générateur de vibrations, le picot escamotable, et la porte escamotable est synchronisé mécaniquement avec le tapis vertical,
- au moins un des éléments parmi le plateau rotatif actionnant la gouttière de la goulotte, le dispositif générateur de vibrations, le picot escamotable, et la porte escamotable est synchronisé électroniquement avec le tapis vertical,
- les dimensions du magasin, de la goulotte, de la porte escamotable, du bac et du tapis vertical sont adaptées aux dimensions des conteneurs à acheminer,
- la goulotte, le bac et le tapis vertical sont inclinés par rapport à la verticale pour retenir les conteneurs au contact de parois latérales associées de la goulotte et du bac.

D'autres caractéristiques et avantages de l'invention apparaîtront à la lecture de la description détaillée qui suit pour la compréhension de laquelle on se reportera aux dessins annexés dans lesquels :
- la figure 1 est une vue de côté d'une unité selon l'invention,
- la figure 2 est une vue de détail de l'unité de la figure 1 au voisinage de la goulotte et du bac,
- la figure 3 est une vue schématique en coupe d'un premier mode de réalisation d'un guide pour le dispositif d'alignement des conteneurs,
- la figure 4 est une vue schématique en coupe d'un deuxième mode de réalisation d'un guide pour le dispositif d'alignement des conteneurs,
- la figure 5 est une vue schématique en coupe d'un troisième mode de réalisation d'un guide pour le dispositif d'alignement des conteneurs,
- la figure 6 est une vue schématique en coupe d'un quatrième mode de réalisation d'un guide pour le dispositif d'alignement des conteneurs.

Dans la description qui va suivre, des chiffres de référence identiques désignent des pièces identiques ou ayant des fonctions similaires.

Par convention, les termes "avant", "arrière", "droit" ou "gauche" désignent respectivement des éléments ou des positions orientés respectivement vers la gauche, la droite, le haut ou le bas des figures.

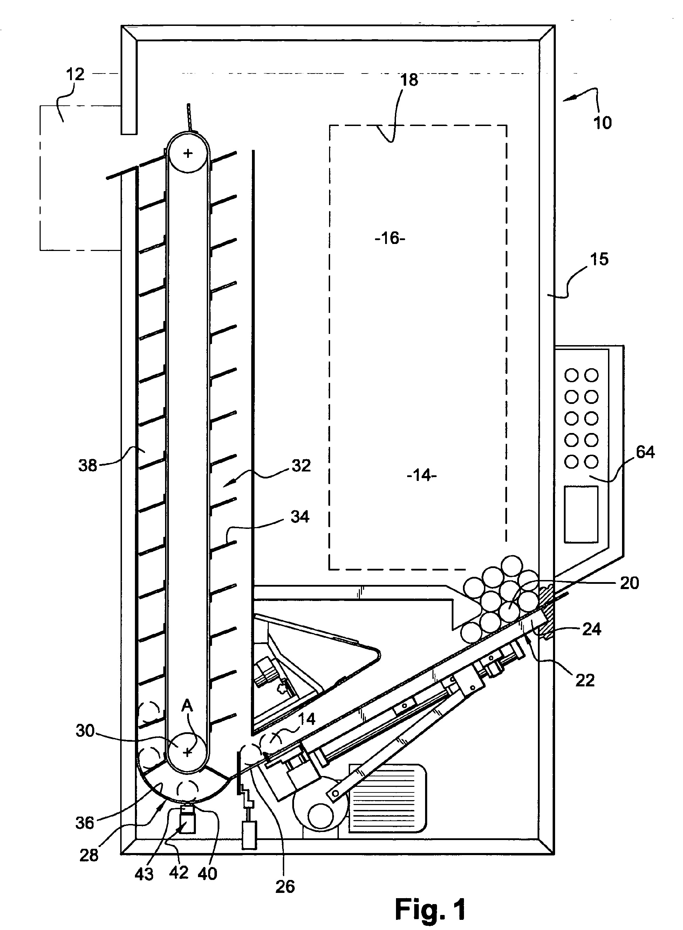

On a représenté à la figure 1 une unité 10 pour l'alimentation en conteneurs 14 vides, d'un poste 12 automatisé de travail, notamment un poste 12 de remplissage et de sertissage. Les conteneurs 14, par exemple des tubes de dentifrice vides, comportent des formes cylindriques, tronconiques, ou elliptiques.

De manière connue, l'unité 10 comporte en amont un magasin 16 destiné à recevoir des conteneurs 14 vides. Le magasin 16 est fixé à au moins un montant 15 vertical de l'unité 10.

Les conteneurs 14 sont, par exemple, introduits par une ouverture 18 agencée dans une face latérale du magasin 16, dans un plan parallèle au plan de la figure 1.

Le magasin 16 est destiné à libérer les conteneurs vides 14, chargés les uns contre les autres suivant leurs génératrices, par son ouverture 20 inférieure dans une goulotte 22 d'accès inclinée et vibrante dont une partie amont 24 est agencée sous l'ouverture inférieure du magasin 16 et dont une extrémité aval 26 alimente conteneur par conteneur un bac 28 en forme de portion de cylindre agencé en regard de l'extrémité inférieure 30 d'un tapis vertical 32 porteur d'aubes 34 qui glissent avec jeu à proximité de la paroi intérieure 36 du bac 28 pour assurer la préhension des conteneurs 14 vides, puis qui glissent contre une paroi verticale 38 de l'unité 10 pour assurer leur élévation vers le poste 12 de travail automatisé. Le jeu entre les aubes 34 et la paroi intérieure 36 du bac 28 ou la paroi verticale 38 de l'unité 10 est inférieur à la plus petite dimension d'un conteneur 14, pour éviter les risques de coincement.

Conformément à l'invention, le bac 28 est semi cylindrique et il comporte à son extrémité inférieure 40 un dispositif 42 qui est destiné à aligner les conteneurs 14 vides sensiblement selon leur génératrice, pour assurer leur bonne préhension par les aubes 34 du tapis 32.

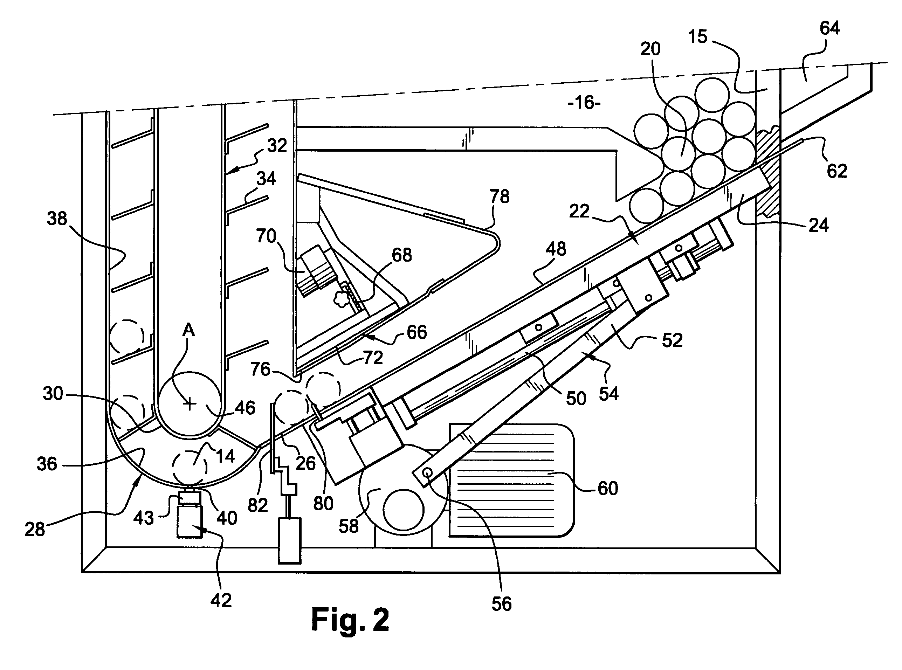

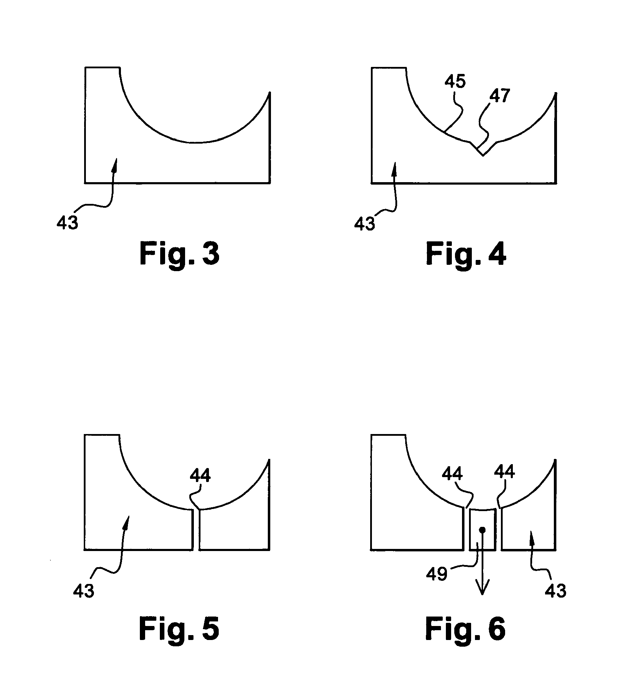

Comme l'illustrent les figures 1, 2 et plus particulièrement la figure 3, le dispositif 42 comporte un guide 43 de section concave orientée suivant l'axe "A" de rotation d'un rouleau inférieur 46 du tapis 32, qui est destiné à aligner les conteneurs 14 vides de forme cylindrique, tronconique, ou elliptique selon leur génératrice.

Selon un premier mode de réalisation du guide 43 qui a été représenté à la figure 3, le guide 43 présente une section en forme de demi-cylindre.

Selon un deuxième mode de réalisation qui a été représenté à la figure 4, le guide 43 présente une section en forme de demi-cylindre au fond 45 de laquelle est agencé un vé 47 de positionnement.

Selon un troisième mode de réalisation qui a été représenté à la figure 5, le dispositif 42 est de surcroît pneumatique et il comporte une lumière oblongue 44, parallèle à l'axe "A" de rotation d'un rouleau 46 inférieur du tapis, qui est alimentée en dépression d'air pour aligner la génératrice inférieure du conteneur 14 entre les bords parallèles (non représentés) de la lumière 44. La génératrice inférieure du conteneur 14 est perpendiculaire au plan de la figure 2 et coïncide avec l'extrémité inférieure du bac 40.

Selon un quatrième mode de réalisation qui a été représenté à la figure 6, le dispositif est pneumatique et il comporte deux lumières 44 oblongues du type décrit précédemment qui sont agencées symétriquement de part et d'autre d'une partie 49 inférieure centrale du guide 43. Cette partie inférieure 49 peut être escamotée comme le représente la flèche de la figure 6. A cet effet, la partie 49 inférieure centrale du guide est par exemple montée coulissante dans le guide 43.

Par ailleurs, la goulotte d'accès 22 comporte une gouttière inférieure 48 qui est montée coulissante sur un rail 50 de même direction et qui est liée à une extrémité 52 d'une bielle 54 dont l'autre extrémité 56 est montée excentrée sur un plateau rotatif 58 pour produire les vibrations de la gouttière 48 inférieure.

Le plateau rotatif 58 est par exemple relié par l'intermédiaire d'un engrenage à renvoi d'angle à un moteur électrique 60 qui est chargé d'assurer son entraînement.

Les mouvements d'oscillation de la gouttière inférieure 48 sont réglables en amplitude et en fréquence, et peuvent être ou non synchronisés avec ceux du tapis 32.

Dans le mode de réalisation préféré de l'invention, la gouttière 48 inférieure fait saille hors de l'unité 10 en s'étendant au delà de l'ouverture 20 inférieure du magasin 16 et au delà du montant 15 pour éliminer tout risque de bourrage des conteneurs 14 lors de leur transfert du magasin 16 à la goulotte 22, ou de formation d'une voûte de conteneurs 14. La partie 62 de la gouttière qui fait saillie hors de l'unité 10 s'étend par exemple sous un panneau de commande 64 de l'unité 10 pour ne pas faire saillie de manière exagérée hors de l'unité 10.

Par ailleurs la goulotte 22 d'accès comporte, à proximité du bac 28, une plaque supérieure 66 qui est destinée à guider les conteneurs 14 vers le bac 28.

Avantageusement, la plaque supérieure 66 est réglable en hauteur, par exemple au moyen d'un dispositif à crémaillère 68 pour s'adapter à différents diamètres de conteneurs 14.

Pour pouvoir guider des génératrices de conteneurs de forme tronconique, une face inférieure 72 de la plaque supérieure 66 est susceptible de recevoir une entretoise 74 qui comporte au moins une surface 76, inclinée par rapport à la plaque supérieure 66. Sur la figure 2 cette entretoise 74 a été représentée de face.

L'entretoise peut de surcroît comporter une surface (on représentée) qui est parallèle à la plaque supérieure 66 et qui est destinée à guider la génératrice d'une partie d'extrémité d'un conteneur destinée à recevoir un bouchon. De la sorte, la surface 76 inclinée et la surface parallèle de l'entretoise 74 sont susceptibles d'épouser le profil d'un conteneur 14 et d'en assurer un guidage parfait. Cette surface permet, en synergie avec la surface 76 inclinée, d'assurer l'orientation des conteneurs 14.

Avantageusement, une tôle de guidage 78, qui présente sensiblement une forme de chevron et qui s'étend parallèlement au plan des figures 1 et 2, comporte un bras 79 inférieur qui est fixé à l'arrière de la plaque supérieure 66 et un bras 81 supérieur qui est par exemple solidaire d'un dispositif 70 générateur de vibrations.

Le bras 79 s'étend en partie au dessus de la gouttière 48. L'espace entre le bras 79 et la gouttière 48 se rétrécit à proximité de la plaque supérieure 66 jusqu'à ce que le bras rejoigne la plaque supérieure 66. De la sorte, le bras 79 et la gouttière 48 forment un entonnoir apte à guider les conteneurs 14 dans la goulotte 22.

Par ailleurs, comme l'illustre la figure 2, l'alimentation conteneur par conteneur du bac 28 par la goulotte 22 est réalisée au moyen :
- d'au moins un picot 80 escamotable qui est susceptible de faire saillie à proximité de l'extrémité aval 26 de la gouttière 48 de la goulotte 22 entre deux conteneurs 14 consécutifs,
- d'une porte escamotable 82, agencée à l'extrémité aval 26 de la goulotte 22, qui est susceptible d'être escamotée pour libérer dans le bac 28 le conteneur 14 contenu dans la goulotte 48 entre le picot 80 escamotable et la porte 82.

Le picot 80 escamotable est agencé à une distance réglable de la porte 82, ce qui permet d'adapter l'alimentation à différentes tailles de conteneurs 14.

De cette manière, la libération d'un conteneur 14 s'effectue comme suit :
L'alignement de conteneurs 14 vides alignés dans la gouttière 48 arrive à l'extrémité aval 26 de la gouttière 22 en butée contre la porte 82. Le picot 80 fait alors saillie pour isoler un conteneur 14 amont du conteneur 14 aval suivant.
Puis la porte 82 s'escamote et libère le conteneur 14. Une fois le conteneur 14 libéré et la porte 82 refermée, le picot 80 s'escamote et le conteneur 14 suivant descend en butée contre la porte 82. Le picot peut alors remonter pour séparer à nouveau deux conteneurs, la porte 82 étant prête à une libération ultérieure.
Pour assurer un bon fonctionnement de l'unité 10, les mouvements du plateau 58 rotatif actionnant la gouttière 48 de la goulotte 22, les mouvements de la plaque 66 supérieure vibrante de la goulotte 22, les mouvements du picot 80 escamotable, les mouvements de la porte 82 escamotable et les mouvements du tapis 32 vertical peuvent être synchronisés, mais cette disposition n'est pas limitative de l'invention.
A cet effet, au moins un des éléments parmi le plateau rotatif 58 actionnant la gouttière de la goulotte, le dispositif 70 générateur de vibrations, le picot 80 escamotable, ou la porte 82 escamotable peut être synchronisé mécaniquement avec le tapis 32 vertical. Cette synchronisation peut par exemple être réalisée au moyen d'un engrenage (non représenté).
En variante, au moins un des éléments parmi le plateau rotatif 58 actionnant la gouttière de la goulotte, le dispositif 70 générateur de vibrations, le picot 80 escamotable, ou la porte 82 escamotable est peut être synchronisé électroniquement avec le tapis 32 vertical.
Il sera compris que les dimensions du magasin 16, de la goulotte 22, de la porte escamotable 82, du bac 28 et du tapis vertical 32 sont adaptés aux dimensions des conteneurs 14 à acheminer.
Enfin, de manière connue, la goulotte 22, le bac 28 et le tapis vertical 32 sont inclinés par rapport à la verticale pour retenir les conteneurs 14 au contact de parois latérales (non représentées) associées de la goulotte 22 et du bac 28, c'est à dire que le plan de la figure 2 est lui-même incliné par rapport à la verticale.

De cette manière, chaque conteneur 14 est aligné contre la paroi latérale de bord de l'élément qui le convoie, ce qui permet de garantir son positionnement rigoureux en sortie du tapis vertical.

L'invention propose donc une unité 10 d'alimentation permettant d'alimenter un poste 12 de travail automatisé en conteneurs sans risque de blocage de l'installation.

## Revendications

1. Unité (10) pour l'alimentation d'un poste (12) de travail automatisé en conteneurs (14) vides comportant des formes cylindriques, tronconiques, ou elliptiques, notamment un poste (12) de remplissage et de sertissage, l'unité (10) comportant d'amont en aval, un magasin (16) destiné à recevoir des conteneurs (14) vides introduits par une ouverture (18) et à les libérer à son ouverture inférieure (20), une goulotte (22) d'accès inclinée et vibrante dont une partie amont (24) est agencée sous l'ouverture inférieure (20) du magasin (16) et dont une extrémité aval (26) alimente conteneur par conteneur un bac (28) en forme de portion de cylindre agencé en regard de l'extrémité inférieure (30) d'un tapis vertical (32) porteur d'aubes (34) qui glissent avec jeu à proximité de la paroi intérieure (36) du bac (28) pour assurer la préhension des conteneurs (14) vides puis qui glissent contre une paroi (38) verticale de l'unité (10) pour assurer leur élévation vers le poste (12) de travail automatisé,
**caractérisée en ce que** le bac (28) est semi cylindrique et **en ce qu'**il comporte à son extrémité inférieure (40) un dispositif (42) qui est destiné à aligner les conteneurs (14) vides de forme cylindrique ou tronconique sensiblement selon leur génératrice, pour assurer leur bonne préhension par les aubes (34) du tapis (32).

2. Unité (10) selon la revendication précédente, **caractérisée en ce que** le dispositif d'alignement (42) des conteneurs (14) comporte un guide (43), de section concave orientée suivant l'axe (A) de rotation d'un rouleau inférieur (46) du tapis (32), qui est destiné à aligner les conteneurs (14) vides selon leur génératrice.

3. Unité (10) selon la revendication 2, **caractérisée en ce que** le guide (43) présente une section en forme de demi-cylindre.

4. Unité (10) selon la revendication 2, **caractérisée en ce que** le guide (43) présente une section en forme de demi-cylindre au fond (45) de laquelle est agencé un vé (47) de positionnement.

5. Unité (10) selon l'une des revendications 2 à 4, **caractérisée en ce que** le dispositif d'alignement (42) des conteneurs (14) est de surcroît pneumatique et comporte au moins une lumière (44) oblongue, agencée au fond du guide (43), qui est alimentée en dépression d'air pour aligner la génératrice inférieure du conteneur (14) dans le guide.

6. Unité selon la revendication 5, **caractérisée en ce que** le dispositif d'alignement (42) des conteneurs (14) comporte deux lumières (44) oblongues agencées symétriquement de part et d'autre d'une partie inférieure centrale (49) escamotable du guide (43).

7. Unité (10) selon l'une quelconque des revendications précédentes, **caractérisée en ce que** la goulotte (22) d'accès comporte une gouttière (48) inférieure qui est montée coulissante sur un rail (50) de même direction et qui est liée à une extrémité (52) d'une bielle (54) dont l'autre extrémité (56) est montée excentrée sur un plateau rotatif (58) pour produire les vibrations de la gouttière (48) inférieure.

8. Unité (10) selon la revendication 7, **caractérisée en ce que** le magasin (16) est fixé à au moins un montant vertical (15) de l'unité (10) et **en ce que** la gouttière (48) inférieure fait saille hors de l'unité (10) en s'étendant au delà de l'ouverture inférieure (20) du magasin (16) et au delà du montant (15) pour éliminer tout risque de bourrage des conteneurs (14).

9. Unité (10) selon l'une quelconque des revendications précédentes, **caractérisée en ce que** la goulotte (22) d'accès comporte, à proximité du bac (28), une plaque (66) supérieure qui est destinée à guider les conteneurs (14) vers le bac (28) et qui est réglable en hauteur pour s'adapter à différents diamètres de conteneurs (14).

10. Unité (10) selon la revendication 9, **caractérisée en ce que** qu'une tôle de guidage (78) en forme de chevron comporte un bras (79) qui est fixé à l'arrière de la plaque supérieure (66) et un bras (81) qui est solidaire d'un dispositif

11. Unité (10) selon l'une des revendications 9 ou 10, **caractérisée en ce qu**'une face inférieure (72) de la plaque supérieure (66) est susceptible de recevoir une entretoise (74) qui comporte au moins une surface (76) inclinée par rapport à la plaque (66) supérieure pour guider les génératrices de conteneurs (14) de forme tronconique.

12. Unité (10) selon la revendication 11, **caractérisée en ce que** l'entretoise (74) comporte de surcroît une surface qui est parallèle à la plaque (66) supérieure et qui est destinée à guider la génératrice d'une partie d'extrémité d'un conteneur (14) destinée à recevoir un bouchon.

13. Unité (10) selon l'une quelconque des revendications précédentes, **caractérisée en ce que** l'alimentation conteneur par conteneur du bac (28) par la goulotte (22) est réalisée au moyen :
- d'au moins un picot (80) escamotable qui est susceptible de faire saillie à proximité de l'extrémité aval (26) de la gouttière (48) de la goulotte (22) entre deux conteneurs (14) consécutifs,
- d'une porte escamotable (82), agencée à l'extrémité aval de la goulotte (22), qui est susceptible d'être escamotée pour libérer dans le bac (28) le conteneur (14) contenu dans la goulotte (48) entre le picot (80) escamotable et la porte (82).

14. Unité (10) selon les revendications 8 et 13 prises en combinaison, **caractérisée en ce que** au moins un des éléments parmi le plateau (58) rotatif actionnant la gouttière (48) de la goulotte (22), le dispositif (70) générateur de vibrations, le picot (80) escamotable, la porte (82) escamotable est synchronisé mécaniquement avec le tapis (32) vertical.

15. Unité (10) selon les revendications 8 et 13 prises en combinaison, **caractérisée en ce que** au moins un des éléments parmi le plateau (58) rotatif actionnant la gouttière (48) de la goulotte (22), le dispositif (70) générateur de vibrations, le picot (80) escamotable, la porte (82) escamotable est synchronisé électroniquement avec le tapis (32) vertical.

16. Unité (10) selon l'une quelconque des revendications 13 à 15, **caractérisée en ce que** les dimensions du magasin (16), de la goulotte (22), de la porte (82) escamotable, du bac (28) et du tapis (32) vertical sont adaptés aux dimensions des conteneurs (14) à acheminer.

17. Unité (10) selon l'une quelconque des revendications précédentes, **caractérisée en ce que** la goulotte (22), le bac (28) et le tapis (32) vertical sont inclinés par rapport à la verticale pour retenir les conteneurs (14) au contact de parois latérales associées de la goulotte (22) et du bac (28).

## Claims

1. Unit (10) for feeding empty containers (14) having cylindrical, frustoconical or elliptical shapes to an automated workstation (12), in particular a filling and sealing station (12), said unit (10) having, from upstream to downstream, a magazine (16) which is intended to receive empty containers (14) introduced through an opening (18) and to release them at its lower opening (20), an inclined and vibrating access chute (22), an upstream part (24) of which is arranged under the lower opening (20) of the magazine (16) and a downstream part (26) of which feeds one container at a time to a bin (28) which is in the shape of a portion of a cylinder and which is arranged opposite the lower end (30) of a vertical conveyor belt (32) carrying vanes (34) which slide, with clearance, close to the inner wall (36) of the bin (28) in order to bring about the gripping of the empty containers (14), and then slide against a vertical wall (38) of the unit (10) in order to bring about the elevation of said containers towards the automated workstation (12),
**characterised in that** the bin (28) is semicylindrical and **in that** it has, at its lower end (40), a device (42) which is intended to align the empty containers (14) of cylindrical or frustoconical shape substantially along their generatrix in order to bring about the satisfactory gripping of said containers by the vanes (34) of the conveyor belt (32).

2. Unit (10) according to the preceding claim, **characterised in that** the aligning device (42) for the containers (14) has a guide (43) which has a concave section oriented along the axis (A) of rotation of a lower roller (46) of the conveyor belt (32) and which is intended to align the empty containers (14) along their generatrix.

3. Unit (10) according to claim 2, **characterised in that** the guide (43) has a section in the shape of a half-cylinder.

4. Unit (10) according to claim 2, **characterised in that** the guide (43) has a section in the shape of a half-cylinder, at the bottom (45) of which section a positioning V-shaped portion (47) is arranged.

5. Unit (10) according to one of claims 2 to 4, **characterised in that** the aligning device (42) for the containers (14) is also pneumatic and has at least one oblong aperture (44) which is arranged at the bottom of the guide (43) and is fed with air under reduced pressure in order to align the lower generatrix of the container (14) within the guide.

6. Unit (10) according to claim 5, **characterised in that** the aligning device (42) for the containers (14) has two oblong apertures (44) which are arranged symmetrically on either side of a retractable lower central part (49) of the guide (43).

7. Unit (10) according to any one of the preceding claims, **characterised in that** the access chute (22) has a lower gutter (48) which is mounted in a sliding manner on a rail (50) having the same direction and is linked to one end (52) of a connecting rod (54), the other end (56) of which is mounted eccentrically on a rotating disc (58) in order to produce the vibrations of the lower gutter (48).

8. Unit (10) according to claim 7, **characterised in that** the magazine (16) is fixed to at least one vertical upright (15) belonging to the unit (10), and **in that** the lower gutter (48) projects out of said unit (10), extending, as it does so, beyond the lower opening (20) of said magazine (16) and beyond said upright (15) in order to eliminate any risk of the containers (14) jamming.

9. Unit (10) according to any one of the preceding claims, **characterised in that** the access chute (22) has, close to the bin (28), an upper plate (66) which is intended to guide the containers (14) towards the bin (28) and is adjustable in height in order to adapt to containers (14) of different diameters.

10. Unit (10) according to claim 9, **characterised in that** a chevron-shaped sheet-metal guide (78) has an arm (79) which is fixed to the rear of the upper plate (66), and an arm (81) which is integral with a vibration-generating device (70).

11. Unit (10) according to one of claims 9 or 10, **characterised in that** a lower face (72) of the upper plate (66) is capable of receiving a strut (74) which has at least one surface (76) which is inclined in relation to said upper plate (66) in order to guide the generatrices of containers (14) of frustoconical shape.

12. Unit (10) according to claim 11, **characterised in that** the strut (74) also has a surface which is parallel to the upper plate (66) and is intended to guide the generatrix of an end part of a container (14), which end part is intended to receive a top.

13. Unit (10) according to any one of the preceding claims **characterised in that** the feeding of one container at a time to the bin (28) through the chute (22) is carried out by means of:
- at least one retractable pin (80) which is capable of projecting, close to the downstream end (26) of the gutter (48) of the chute (22), between two consecutive containers (14);
- a retractable gate (82) which is arranged at the downstream end of the chute (22) and is capable of being retracted in order to release into the bin (28) the container which is contained in the chute (48) between the retractable pin (80) and the gate (82).

14. Unit (10) according to claims 8 and 13, taken in combination, **characterised in that** at least one of the following elements: the rotating disc (58) activating the gutter (48) of the chute (22), the vibration-generating device (70), the retractable pin (80) and the retractable gate (82), is synchronised mechanically with the vertical conveyor belt (32).

15. Unit (10) according to claims 8 and 13, taken in combination, **characterised in that** at least one of the following elements: the rotating disc (58) activating the gutter (48) of the chute (22), the vibration-generating device (70), the retractable pin (80) and the retractable gate (82), is synchronised electronically with the vertical conveyor belt (32).

16. Unit (10) according to any one of claims 13 to 15, **characterised in that** the dimensions of the magazine (16), of the chute (22), of the retractable gate (82), of the bin (28) and of the vertical conveyor belt (32) are adapted to the dimensions of the containers (14) to be transported.

17. Unit (10) according to any one of the preceding claims, **characterised in that** the chute (22), the bin (28) and the vertical conveyor belt (32) are inclined in relation to the vertical in order to keep the containers (14) in contact with associated side walls of said chute (22) and said bin (28).

## Patentansprüche

1. Zuführeinheit (10) für die Zufuhr von leeren Behältern (14) mit zylindrischen, kegelstumpfartigen, oder elliptischen Formen zu einer automatisierten Bearbeitungsstation (12), insbesondere einer Station (12) für die Befüllung und Verbördelung, wobei die Einheit (10) von oben nach unten ein Magazin (16) umfasst, das zum Aufnehmen der durch eine Öffnung (18) zugeführten leeren Behälter (14) vorgesehen ist und dazu, diese an seiner unteren Öffnung (20) freizugeben, eine geneigte und schwingungsfähige Zuführrutsche (22), deren oberer Teil (24) unterhalb der unteren Öffnung (20) des Magazins (16) angeordnet ist und deren unteres Ende (26) einer Aufnahme (28) mit der Form eines Zylinderabschnitts einen Behälter nach dem anderen zuführt, wobei die Aufnahme dem unteren Ende (30) eines vertikalen Transportbands (32) gegenüberliegend angeordnet ist, das Laufschaufeln (34) trägt, die nahe der Innenwandung (36) der Aufnahme (28) mit Spielraum gleiten, um das Greifen der leeren Behälter (14) sicherzustellen, die dann an einer vertikalen Wandung (38) der Einheit (10) aufgleiten, damit sichergestellt ist, dass sie zu der automatisierten Bearbeitungsstation (12) angehoben werden,
**dadurch gekennzeichnet, dass** die Aufnahme (28) halbzylindrisch ist und dass sie an ihrem unteren Ende (40) eine Vorrichtung (42) umfasst, die dazu vorgesehen ist, die leeren zylinderförmigen oder kegelstumpfförmigen Behälter (14) im Wesentlichen nach ihrer Mantellinie auszurichten, um sicherzustellen, dass die Behälter von den Laufschaufeln (34) des Transportbands (32) gut ergriffen werden können.

2. Einheit (10) nach dem vorhergehenden Anspruch, **dadurch gekennzeichnet, dass** die Vorrichtung für die Ausrichtung (42) der Behälter (14) eine Führung (43) mit konkavem Querschnitt umfasst, die nach der Rotationsachse (A) einer unteren Walze (46) des Transportbands (32) ausgerichtet ist und die dazu vorgesehen ist, die leeren Behälter (14) nach ihrer Mantellinie auszurichten.

3. Einheit (10) nach Anspruch 2, **dadurch gekennzeichnet, dass** die Führung (43) einen Querschnitt in Form eines Halbzylinders aufweist.

4. Einheit (10) nach Anspruch 2, **dadurch gekennzeichnet, dass** die Führung (43) einen Querschnitt in Form eines Halbzylinders aufweist, an dessen Boden (45) ein Positionierprisma (47) angeordnet ist.

5. Einheit (10) nach einem der Ansprüche 2 bis 4, **dadurch gekennzeichnet, dass** die Vorrichtung für die Ausrichtung (42) der Behälter (14) darüber hinaus pneumatisch ist und mindestens ein Schlitzloch (44) umfasst, das am Boden der Führung (43) angeordnet ist und das mit Luftunterdruck beaufschlagt wird, um die untere Mantellinie des leeren Behälters (14) in der Führung auszurichten.

6. Einheit nach Anspruch 5, **dadurch gekennzeichnet, dass** die Vorrichtung für die Ausrichtung (42) der Behälter (14) zwei Schlitzlöcher (44) umfasst, die symmetrisch auf beiden Seiten eines zentralen, versenkbaren unteren Teils (49) der Führung (43) angeordnet sind.

7. Einheit (10) nach einem der vorhergehenden Ansprüche, **dadurch gekennzeichnet, dass** die Zuführrutsche (22) eine untere Rinne (48) umfasst, die verschiebbar auf einer Schiene (50) gelagert ist, die in derselben Richtung verläuft und die mit einem Ende (52) einer Stange (54) verbunden ist, deren anderes Ende (56) an einer Drehscheibe (58) exzentrisch angelagert ist, um die Schwingungen der unteren Rinne (48) zu erzeugen.

8. Einheit (10) nach Anspruch 7, **dadurch gekennzeichnet, dass** das Magazin (16) an mindestens einer vertikalen Stütze (15) der Einheit (10) befestigt ist und **dadurch**, dass die untere Rinne (48) aus der Einheit (10) herausragt, da sie sich über die untere Öffnung (20) des Magazins (16) und über die Stütze (15) hinaus erstreckt, damit jede Gefahr eines Staus der Behälter (14) vermieden wird.

9. Einheit (10) nach einem der vorhergehenden Ansprüche, **dadurch gekennzeichnet, dass** die Zuführrutsche (22) nahe der Aufnahme (28) eine obere Platte (66) umfasst, die dazu vorgesehen ist, die Behälter (14) zu der Aufnahme (28) zu leiten und die höhenverstellbar ist, um an verschiedene Durchmesser von Behältern (14) anpassbar zu sein.

10. Einheit (10) nach Anspruch 9, **dadurch gekennzeichnet, dass** ein sparrenförmiges Leitblech (78) einen an der Rückseite der oberen Platte (66) befestigten Arm (79) umfasst und einen Arm (81), der fest mit einer Schwingungserzeugungseinrichtung (70) verbunden ist.

11. Einheit (10) nach einem der Ansprüche 9 oder 10, **dadurch gekennzeichnet, dass** eine Unterseite (72) der oberen Platte (66) einen Abstandshalter (74) aufnehmen kann, der mindestens eine, bezogen auf die obere Platte (66) geneigte Oberfläche (76) aufweist, um die Mantellinien von kegelstumpfförmigen Behältern (14) zu führen.

12. Einheit (10) nach Anspruch 11, **dadurch gekennzeichnet, dass** der Abstandshalter (74) darüber hinaus eine Oberfläche aufweist, die parallel zu der oberen Platte (66) verläuft, und die dazu bestimmt ist, die Mantellinie eines Endbereichs eines Behälters (14) zu führen, der zur Aufnahme eines Deckels vorgesehen ist.

13. Einheit (10) nach einem der vorhergehenden Ansprüche, **dadurch gekennzeichnet, dass** die Zufuhr eines Behälters nach dem anderen durch die Rutsche (22) herbeigeführt wird mittels:
- mindestens eines versenkbaren Fortsatzes (80), der nahe dem unteren Ende (26) der Rinne (48) der Rutsche (22) zwischen zwei aufeinanderfolgenden Behältern (14) hervorragen kann,
- einer versenkbaren Tür (82), die am unteren Ende der Rutsche (22) angeordnet ist und die versenkt werden kann zur Freigabe des in der Rinne (48) zwischen dem versenkbaren Fortsatz (80) und der Tür (82) befindlichen Behälters (14) in die Aufnahme (28).

14. Einheit (10) nach den Ansprüchen 8 und 13 in Kombination, **dadurch gekennzeichnet, dass** mindestens eines der folgenden Elemente mechanisch mit dem vertikalen Transportband (32) synchronisiert ist: die Drehscheibe (58), welche die Rinne (48) der Rutsche (22) betätigt, die Schwingungserzeugungseinrichtung (70), der versenkbare Fortsatz (80), die versenkbare Tür (82).

15. Einheit (10) nach den Ansprüchen 8 und 13 in Kombination, **dadurch gekennzeichnet, dass** mindestens eines der Elemente elektronisch mit dem vertikalen Transportband (32) synchronisiert ist: die Drehscheibe (58), welche die Rinne (48) der Rutsche (22) betätigt, die Schwingungserzeugungseinrichtung (70), der versenkbare Fortsatz (80), die versenkbare Tür (82).

16. Einheit (10) nach einem der Ansprüche 13 bis 15, **dadurch gekennzeichnet, dass** die Abmessungen des Magazins (16), der Rutsche (22), der versenkbaren Tür (82), der Aufnahme (28) und des vertikalen Transportbands (32) den Abmessungen der zu befördernden Behälter (14) angepasst sind.

17. Einheit (10) nach einem der vorhergehenden Ansprüche, **dadurch gekennzeichnet, dass** die Rutsche (22), die Aufnahme (28) und das vertikale Transportband (32) bezogen auf die Vertikale geneigt sind, um die Behälter (14) vom Kontakt mit der der Rutsche (22) und der Aufnahme (28) zugeordneten Seitenwandungen zurückzuhalten.
